# EUROPÄISCHE PATENTSCHRIFT

(11) **EP 0 894 763 B1**
(45) Veröffentlichungstag und Bekanntmachung des Hinweises auf die Patenterteilung: **03.05.2006**
(21) Anmeldenummer: 98113791.2
(22) Anmeldetag: 23.07.1998
(51) Int. Cl.: B66F 9/20, B62D 51/00

(54) **Deichselkopf für ein deichselgelenktes Flurförderzeug**
Drawbarhead for an industrial truck guided by a drawbar
Tête de timon pour un chariot de manutention guidé par timon

(30) Priorität: 30.07.1997 DE 19732890
(43) Veröffentlichungstag der Anmeldung: 03.02.1999
(73) Patentinhaber: STILL S.A.R.L., 77100 Meaux (FR)
(72) Erfinder: Weber, Edgar, Dipl.-Ing., 72459 Albstadt (DE); Schöller, Eugen, Dipl.-Ing., 72336 Balingen (DE); Nedele, Hartmut, 72555 Metzingen/Glems (DE); Bruder, Frédéric, Dipl.-Ing., 60300 Senlis (FR); Maller, Pierre, Dipl.-Ing., 63864 Glattbach (DE)
(74) Vertreter: Kasseckert, Rainer

(56) Entgegenhaltungen:
- DE-A- 4 444 772
- DE-A- 19 548 950
- DE-A- 19 601 694
- DE-U- 9 417 201

## Beschreibung

Die Erfindung betrifft einen Deichselkopf für ein deichselgelenktes Flurförderzeug, wobei am Deichselkopf Bedienelemente für verschiedene Funktionen des Flurförderzeugs, beispielsweise für den Fahrantrieb oder für eine Hubvorrichtung, angeordnet sind, und die Bedienelemente mit Signalgebern zur Erzeugung von elektrischen Steuersignalen in Wirkverbindung stehen, wobei mindestens zwei Signalgeber von Folienschaltern gebildet sind.

Deichselgeführte Flurförderzeuge sind beispielsweise als elektrisch angetriebene Niederhubwagen oder Hochhubwagen ausgeführt, die als Mitgängerfahrzeuge oder Fahrerstandfahrzeuge ausgeführt sein können. Deichselköpfe der genannten Art weisen in der Regel Bedienelemente für den Fahrantrieb, die Hubvorrichtung, eine Zusatzhubvorrichtung, eine Hupe und einen Sicherheitsschalter auf. Die genannten Bedienelemente sind mit Signalgebern verbunden, mit denen Ein/Aus-Steuersignale, mehrstufige Steuersignale oder stufenlose Steuersignale erzeugt werden.

Bekannt ist es z.B. aus der DE 44 44 772, die einen Deichselkopf gemäß dem Oberbegriff des Anspruchs 1 offenbart, mehrere Mikroschalter zur Erzeugung von Ein/Aus-Steuersignalen auf einer gemeinsamen Platine anzuordnen. Ein Potentiometer zur Erzeugung eines stufenlosen Steuersignals für den Fahrantrieb ist bei diesem Deichselkopf als von der Platine getrenntes Bauteil ausgeführt. Das handelsübliche Potentiometer benötigt hierbei einen erheblich großen Bauraum. Weitere Signalgeber für stufenlose oder mehrstufige Steuersignale sind nicht vorgesehen. Die hierbei verwendeten Mikroschalter besitzen zahlreiche bewegbare mechanische Teile und weisen daher eine begrenzte Lebensdauer auf.

Aus der DE 196 01 694 ist es bekannt, Folientaster am Deichselkopf eines Flurförderzeugs anzuordnen. Dabei handelt es sich jedoch um Taster, die an der Außenseite des Deichselkopfes angeordnet sind und die direkt von einer Bedienperson betätigt werden.

Der vorliegenden Erfindung liegt die Aufgabe zugrunde, einen einfach aufgebauten, wenig verschleißanfälligen Deichselkopf zur Verfügung zu stellen, der sich bei einer Vielzahl von Funktionen durch ein hohes Maß an Integration und eine geringe Anzahl von Bauteilen auszeichnet.

Diese Aufgabe wird mittels eines Deichselkopfes gemäß unabhängigen Anspruch 1 gelöst, wobei mindestens zwei Folienschalter auf der gemeinsamen Platine angeordnet sind, mit mindestens einem auf der gemeinsamen Platine angeordneten Foljeoschalter ein stufenloses oder ein mehrstufiges Steuersignal erzeugbar ist und mit mindestens einem auf der gemeinsamen Platine angeordneten Folienschalter ein Ein/Aus-Steuersignal erzeugbar ist. Somit können verschiedenartige Funktionen des Flurförderzeugs mit den auf der gemeinsamen Platine angeordneten Folienschaltern gesteuert werden.

Gemäß einer vorteilhaften Ausgestaltung der Erfindung weist mindestens ein Folienschalter mehrere auf der gemeinsamen Platine angeordnete Kontaktflächen auf. Der Folienschalter ist hierdurch zur Erzeugung eines mehrstufigen Steuersignals geeignet. In einer anderen Ausgestaltung weist mindestens ein Folienschalter mindestens eine auf der gemeinsamen Platine angeordnete Widerstandsbahn auf. Mit dem Folienschalter kann dann ein stufenloses Steuersignal erzeugt werden. Die Kontaktflächen bzw. die Widerstandsbahn befinden sich direkt auf der gemeinsamen Platine, wodurch auf ein gesondertes Befestigungselement verzichtet werden kann. Kleinere Kontaktflächen werden nachfolgend auch als Kontaktstellen bezeichnet.

Es ist zweckmäßig, wenn der gemeinsamen Platine mindestens eine Kontaktfolie zugeordnet ist, die mittels einer auf die Kontaktfolie ausübbaren Druckkraft mit einer Kontaktfläche bzw. einer Widerstandsbahn elektrisch verbindbar ist. Die elektrisch leitende Kontaktfolie wird durch die Druckkraft auf mindestens eine auf einer Platine angeordnete Kontaktstelle bzw. die Widerstandsbahn gedrückt, wodurch eine elektrische Verbindung zwischen der Kontaktfolie und der Kontaktstelle bzw. der Widerstandsbahn hergestellt wird. In Abhängigkeit von dem Ort, an dem die Druckkraft aufgebracht wird, ändert der Folienschalter seinen Widerstand. Dieser Ort wird von der Bedienperson durch die Stellung des Bedienelements festgelegt. Bei Verwendung einer Widerstandsbahn kann ein stufenloses Steuersignal, bei Verwendung von mehreren hintereinander angeordneten Kontaktstellen ein mehrstufiges Steuersignal erzeugt werden. Ein einzelner Schalter der genannten Bauart mit Widerstandsbahn ist beispielsweise in dem DE-GM 94 17 201 beschrieben.

In einer anderen vorteilhaften Ausführungsform der Erfindung weist mindestens ein Folienschalter mindestens eine drucksensitive Widerstandsfolie auf. Die drucksensitive Widerstandsfolie ändert ihren inneren Widerstand in Abhängigkeit von einer von der Bedienperson ausgeübten Druckkraft. Durch diesen, sich kontinuierlich ändemden Widerstandswert kann ein stufenloses Steuersignal erzeugt werden.

Insbesondere bei der Verwendung von Folienschaltern einer der oben beschriebenen Bauarten zur Erzeugung von mehrstufigen oder stufenlosen Steuersignalen ergeben sich erhebliche Einsparungen an Bauraum und eine wesentlich geringere Anzahl von Bauteilen. Vorteile ergeben sich ebenfalls, wenn Signalgeber zur Erzeugung von Ein/Aus-Steuersignalen von Folienschaltern gebildet werden. Es kann hierbei auf verschleißanfällige Mikroschalter verzichtet werden.

Mit besonderem Vorteil sind alle auf der gemeinsamen Platine angeordneten Signalgeber von Folienschaltern gebildet.

Besonders zweckmäßig ist es, wenn auf der Platine befestigte elektrische Bauelemente ausschließlich auf der der Kontaktfolie abgewandten Seite angeordnet sind. Auf einer Seite der gemeinsamen Platine ist die Kontaktfolie angeordnet, die durch eine Druckkraft mit einer auf der Platine aufgebrachten Widerstandsbahn oder Kontaktstelle verbindbar ist. Sämtliche auf der Platine angeordnete elektrische Bauelemente, wie z.B. Widerstände, Kondensatoren oder Transistoren, befinden sich auf der anderen Seite der Platine.

In einer Ausgestaltung der Erfindung ist auf der gemeinsamen Platine ein Signalgeber zur Erzeugung eines mehrstufigen oder stufenlosen Steuersignals für die Fahrgeschwindigkeit des Flurförderzeugs angeordnet. Hierbei ist es ebenfalls zweckmäßig, wenn auf der gemeinsamen Platine ein Signalgeber zur Erzeugung eines Ein/Aus-Steuersignals für die Fahrrichtung des Flurförderzeugs angeordnet ist. Es stehen somit zwei voneinander getrennte Steuersignale für den Fahrantrieb des Flurförderzeugs zur Verfügung, die mit dem selben Bedienelement erzeugbar sind. Der Fahrantrieb wird nur dann eingeschaltet, wenn von beiden Signalgebern ein entsprechendes Signal erzeugt wird. Eine Zweikanaligkeit der Signalerzeugung für den Fahrantrieb ist bei der erfindungsgemäßen Ausführung gewährleistet, wobei beide Signalgeber auf der gemeinsamen Platine angeordnet sind und somit die Anzahl der Bauteile gegenüber einem herkömmlichen Deichselkopf erheblich reduziert ist.

Zweckmäßig ist es ebenfalls, wenn auf der gemeinsamen Platine ein Signalgeber zur Erzeugung eines mehrstufigen oder stufenlosen Steuersignals für die Hebegeschwindigkeit einer Hubvorrichtung angeordnet ist. Analog hierzu ist auf der gemeinsamen Platine ein Signalgeber zur Erzeugung eines mehrstufigen oder stufenlosen Steuersignals für die Senkgeschwindigkeit einer Hubvorrichtung angeordnet. Es sind hierfür zwei getrennte Bedienelemente mit jeweils einem Signalgeber vorgesehen.

In einer weiteren Ausgestaltung der Erfindung ist auf der gemeinsamen Platine jeweils ein Signalgeber zur Erzeugung eines Ein/Aus-Steuersignals für eine Hupe und/oder das Anheben einer Zusatzhubvorrichtung und/oder das Absenken einer Zusatzhubvorrichtung angeordnet. Die sog. Zusatzhubvorrichtung stellt eine von der oben beschriebenen Haupthubvorrichtung zumindest teilweise unabhängig betätigbare, zusätzliche Hubvorrichtung dar. Auch für die Zusatzhubvorrichtung sind zwei voneinander unabhängige Bedienelemente und zwei voneinander unabhängige Signalgeber vorgesehen.

Weitere Vorteile und Einzelheiten der Erfindung werden anhand des in den schematischen Figuren dargestellten Ausführungsbeispiels näher erläutert. Dabei zeigt
- Figur 1: eine erfindungsgemäße Deichsel im Längsschnitt von der Seite,
- Figur 2: eine erfindungsgemäße Deichsel im Längsschnitt von oben,
- Figur 3: eine erfindungsgemäße Deichsel im Querschnitt,
- Figur 4: eine gemeinsame Platine,
- Figur 5: ein Folienschaltelement in Draufsicht,
- Figur 6: ein Folienschaltelement im Querschnitt.

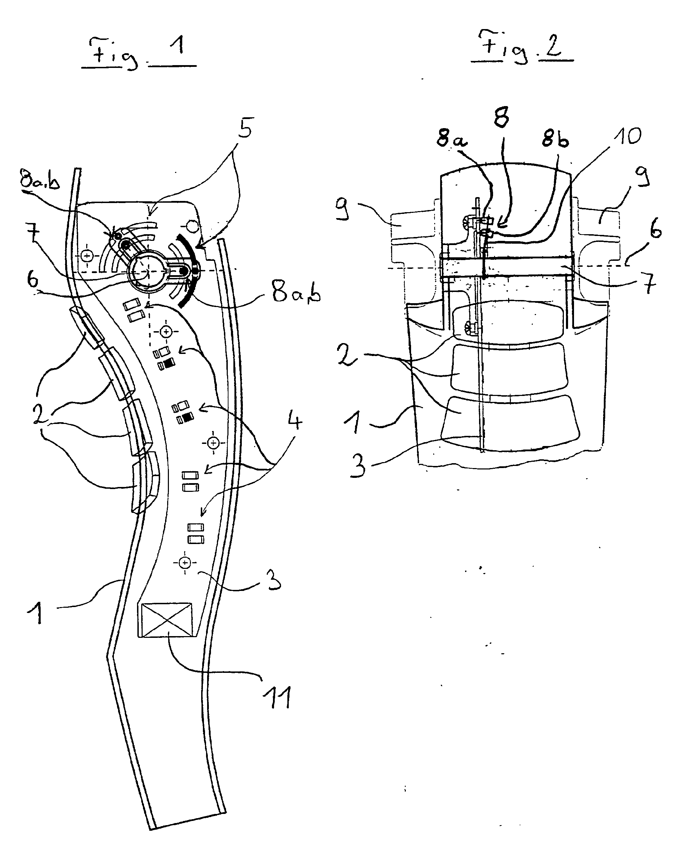

Figur 1 zeigt den Deichselkopf einer erfindungsgemäßen Deichsel eines Flurförderzeugs im Längsschnitt von der Seite. Auf der Oberseite eines Gehäuses 1 des Deichselkopfes befinden sich als Taster 2 ausgeführte Bedienelemente zur Betätigung einer Hubvorrichtung, einer Zusatzhubvorrichtung und einer Hupe. Hierbei sind teilweise zwei Taster 2 nebeneinander, d.h. sich in dieser Ansicht verdeckend angeordnet. Im Inneren des Gehäuses 1 befindet sich eine Platine 3, auf der erfindungsgemäß die Signalgeber 4 der Bedienelemente angeordnet sind. Hierbei ist jedem Taster 2 ein Signalgeber 4 zugeordnet. Auf der Platine 3 befinden sich weiterhin zwei Signalgeber 5 für den Fahrantrieb des Flurförderzeugs. Eine drehbare Welle 7 eines als Drehschalter ausgeführten Bedienelements für den Fahrantrieb ist um eine Achse 6 drehbar. An der Welle 7 sind Schleifer 8a,b befestigt, die Teile des Signalgebers 5 darstellen. Sämtliche mit den Signalgebern 4, 5 erzeugten Steuersignale können an einer gemeinsamen Steckerverbindung 11 abgegriffen werden. Die Signalgeber 4 sind, in Reihenfolge von in der Zeichnung oben nach unten, mit den folgenden Funktionen belegt: Hupe, Haupthub heben, Haupthub senken, Zusatzhub heben, Zusatzhub senken.

In Figur 2 ist ein Teil des Deichselkopfes im Längsschnitt von oben dargestellt. Zu erkennen sind hier zwei mit der Welle 7 verbundenen Betätigungskörper 9 des Drehschalters. Die beiden mit der Welle 7 verbundene Schleifer 8a,b werden mittels einer Blattfeder 10 auf eine in dieser Figur nicht dargestellte Kontaktfolie gedrückt, welche sich zwischen den Schleifern 8a,b und der Platine 3 befindet. Bei einem Betätigen des Drehschalters werden die Schleifer 8a,b entlang eines Kreisbogens über die Kontaktfolie bewegt.

Die entsprechende Anordnung eines Signalgebers 4 für einen Tastschalter ist in Figur 3 dargestellt. Bei einem Niederdrücken den Tasters 2 bewegen sich zwei sich in dieser Ansicht gegenseitig verdeckende Schleifer 10a,b geradlinig über die zwischen den Schleifern 10a,b und der Platine 3 befindliche Kontaktfolie.

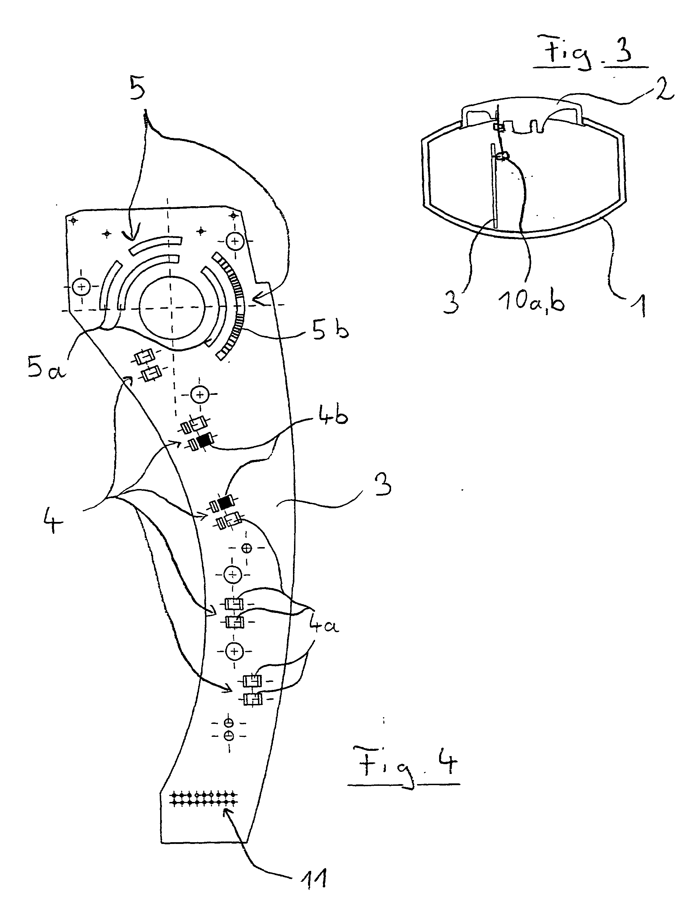

In Figur 4 ist die Anordnung der Signalgeber 4,5 auf der gemeinsamen Platine 3 verdeutlicht. Jeder Signalgeber weist dabei zwei nebeneinander angeordnete Kontaktbahnen auf, die mittels der Schleifer 8a,b bzw. 10a,b über die Kontaktfolie miteinander elektrisch verbindbar sind. Als weiße Flächen sind hierbei durchgehende Kontaktflächen 4a, 5a eingezeichnet. Schaltelemente zur Erzeugung eines Ein/Aus-Steuersignals, z.B. für eine Hupe oder eine Zusatzhubvorrichtung, weisen zwei nebeneinander angeordnete durchgehende Kontaktflächen 4a auf.

Bei Schaltelementen zur Erzeugung eines mehrstufigen Steuersignals, z.B. für den Fahrantrieb oder die Hubvorrichtung, ist neben einer durchgehenden Kontaktfläche 4a, 5a eine aus mehreren hintereinander angeordneten Kontaktstellen 4b, 5b bestehende Kontaktbahn angeordnet. Die hintereinander angeordneten Kontaktstellen 4b sind als durchgehende schwarze Fläche dargestellt.

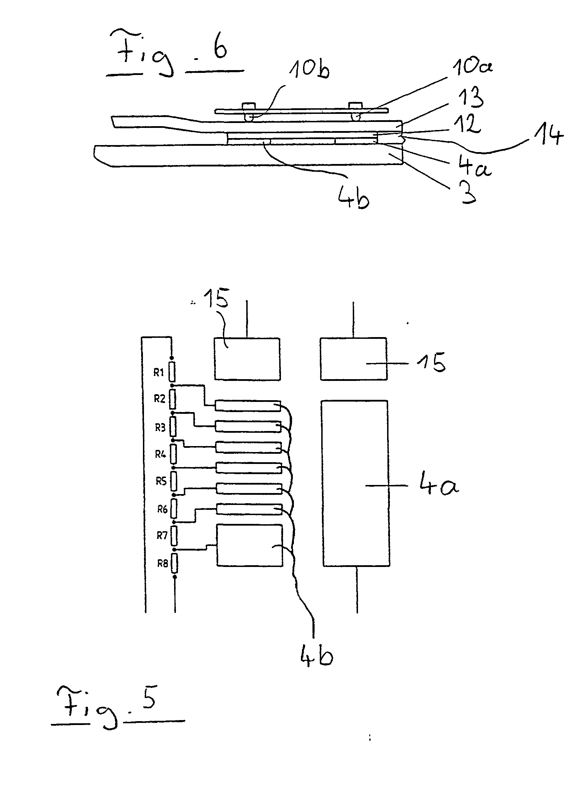

Figur 5 zeigt den prinzipiellen Aufbau eines Schaltelements mit den Kontaktstellen 4b und der Kontaktfläche 4a auf der Platine 3, zur Erzeugung eines mehrstufigen Steuersignals. Ebenfalls dargestellt ist die Anordnung einer Reihe von Widerständen R1 bis R8, wobei jede Kontaktstelle 4b mit einer Verbindungsleitung zweier Widerstände verbunden ist. Die Abstände zwischen den Kontaktstellen 4b sind so breit ausgeführt, daß bei betätigtem Schaltelement jederzeit mindestens eine Kontaktstelle 4b mit der Kontaktfolie verbunden ist. Die in der Zeichnung unterste Kontaktstelle 4b, über der sich der Schleifer 10b bei in Endstellung betätigtem Schaltelement befindet, ist breiter als die übrigen Kontaktstellen 4b ausgeführt. Es ist damit sichergestellt, daß bei in Endstellung betätigtem Schaltelement der Schleifer 10b keinesfalls über die in der Zeichnung unterste Kontaktstelle 4b hinaus bewegt werden kann. In der Zeichnung oberhalb der Kontaktstellen 4b und der Kontaktfläche 4a befinden sich jeweils eine zusätzliche Kontaktstelle 15, welche mittels der Schleifer 8a,b über die leitende Schicht 14 der Kontaktfolie 13 bei in Nullstellung befindlichem Schaltelement miteinander verbunden sind. Mit den zusätzlichen Kontaktstellen 15 kann die Nullstellung des Schaltelements über eine getrennte elektrische Schaltung erfaßt werden, wodurch die Voraussetzungen für eine zweikanalige Signalverarbeitung erfüllt sind.

Bei einem Schaltelement zur Erzeugung eines stufenlosen Steuersignals ist anstelle der Kontaktstellen 4b und der Widerstände R1-8 eine durchgehende, mit der Kontaktfolie kontaktierbare Widerstandsbahn aufgebracht.

In Figur 6 ist der Querschnitt des Schaltelements dargestellt. Auf einer im wesentlichen starren Platine 3 sind mehrere, in dieser Ansicht einander verdeckende, Kontaktstellen 4b, sowie eine Kontaktfläche 4a aufgebracht. Oberhalb der Kontaktstellen 4b bzw. der Kontaktfläche 4a befindet sich eine mit einer elektrisch leitenden Schicht 12 versehene Kontaktfolie 13. Im nicht betätigten Zustand sind die Kontaktstellen 2 mittels eines einen Luftspalt erzeugenden Abstandshalters 14 elektrisch von der Kontaktfläche 4a getrennt.

In betätigtem Zustand übt der Schleifer 10b eine Druckkraft auf die Kontaktfolie 13 im Bereich einer Kontaktstelle 4b auf. Gleichzeitig drückt der zweite Schleifer 10a auf die Kontaktfolie 13 im Bereich der Kontaktfläche 4a. Die leitende Schicht 12 der Kontaktfolie 13 wird hierdurch mit der Kontaktfläche 4a und, abhängig von der Position des Schleifers 8b, mit einer bestimmten Kontaktstelle 4b verbunden. Der Luftspalt wird dann durch elastische Verformung der Kontaktfolie 13 im Bereich der Schleifer 10a,b überbrückt. Bei der beschriebenen Anordnung findet kein Stromfluß durch die Schleifer 10a,b statt. Die Schleifer 10a,b drücken unabhängig von der Stellung des Schaltelements mit konstanter Kraft auf die Kontaktfolie 13.

## Patentansprüche

1. Deichselkopf für ein deichselgelenktes Flurförderzeug, wobei am Deichselkopf Bedienelemente für verschiedene Funktionen des Flurförderzeugs, beispielsweise für den Fahrantrieb oder für eine Hubvorrichtung, angeordnet sind, und die Bedienelemente mit Signalgebern (4, 5) zur Erzeugung von elektrischen Steuersignalen in Wirkverbindung stehen, wobei mindestens zwei Signalgeber (4, 5) von Folienschaltern gebildet sind, **dadurch gekennzeichnet, daß** mindestens zwei Folienschalter auf der gemeinsamen Platine (3) angeordnet sind, daß mit mindestens einem auf der gemeinsamen Platine (3) angeordneten Folienschalter ein stufenloses oder ein mehrstufiges Steuersignal erzeugbar ist und daß mit mindestens einem auf der gemeinsamen Platine (3) angeordneten Folienschalter ein Ein/Aus-Steuersignal erzeugbar ist.

2. Deichselkopf nach Anspruch 1, **dadurch gekennzeichnet, daß** mindestens ein Folienschalter mehrere auf der gemeinsamen Platine (3) angeordnete Kontaktflächen (4b, 5b) aufweist.

3. Deichselkopf nach Anspruch 1 oder 2, **dadurch gekennzeichnet, daß** mindestens ein Folienschalter mindestens eine auf der gemeinsamen Platine (3) angeordnete Widerstandsbahn aufweist.

4. Deichselkopf nach Anspruch 2 oder 3, **dadurch gekennzeichnet, daß** der gemeinsamen Platine (3) mindestens eine Kontaktfolie (13) zugeordnet ist, die mittels einer auf die Kontaktfolie (13) ausübbaren Druckkraft mit einer Kontaktfläche (4a, 4b, 5a, 5b) bzw. einer Widerstandsbahn elektrisch verbindbar ist.

5. Deichselkopf nach einem der Ansprüche 1 bis 4, **dadurch gekennzeichnet, daß** mindestens ein Folienschalter mindestens eine drucksensitive Widerstandsfolie aufweist.

6. Deichselkopf nach einem der Ansprüche 1 bis 5, **dadurch gekennzeichnet, daß** alle auf der gemeinsamen Platine (3) angeordneten Signalgeber von Folienschaltern gebildet sind.

7. Deichselkopf nach einem der Ansprüche 4 bis 6, **dadurch gekennzeichnet, daß** auf der Platine (3) befestigte elektrische Bauelemente ausschließlich auf der der Kontaktfolie (13) abgewandten Seite angeordnet sind.

8. Deichselkopf nach einem der Ansprüche 1 bis 7, **dadurch gekennzeichnet, daß** auf der gemeinsamen Platine (3) ein Signalgeber (5) zur Erzeugung eines mehrstufigen oder stufenlosen Steuersignals für die Fahrgeschwindigkeit des Flurförderzeugs angeordnet ist.

9. Deichselkopf nach einem der Ansprüche 1 bis 8, **dadurch gekennzeichnet, daß** auf der gemeinsamen Platine (3) ein Signalgeber (5) zur Erzeugung eines Ein/Aus-Steuersignals für die Fahrrichtung des Flurförderzeugs angeordnet ist.

10. Deichselkopf nach einem der Ansprüche 1 bis 9, **dadurch gekennzeichnet, daß** auf der gemeinsamen Platine (3) ein Signalgeber (4) zur Erzeugung eines mehrstufigen oder stufenlosen Steuersignals für die Hebegeschwindigkeit einer Hubvorrichtung angeordnet ist.

11. Deichselkopf nach einem der Ansprüche 1 bis 10, **dadurch gekennzeichnet, daß** auf der gemeinsamen Platine (3) ein Signalgeber (4) zur Erzeugung eines mehrstufigen oder stufenlosen Steuersignals für die Senkgeschwindigkeit einer Hubvorrichtung angeordnet ist.

12. Deichselkopf nach einem der Ansprüche 1 bis 11, **dadurch gekennzeichnet, daß** auf der gemeinsamen Platine (3) jeweils ein Signalgeber (4) zur Erzeugung eines Ein/Aus-Steuersignals für eine Hupe und/oder das Anheben einer Zusatzhubvorrichtung und/oder das Absenken einer Zusatzhubvorrichtung angeordnet ist.

## Claims

1. Tiller head for a tiller-steered industrial truck, operating elements for various functions of the industrial truck, for example for the traction drive or for a lifting device, being arranged on the tiller head, and the operating elements being operatively connected to signal transmitters (4, 5) for generating electrical control signals, at least two signal transmitters (4, 5) being formed by membrane switches, **characterized in that** at least two membrane switches are arranged on the common printed circuit board (3), **in that** a continuously variable or multi-level control signal can be generated using at least one membrane switch arranged on the common printed circuit board (3), and **in that** an on/off control signal can be generated using at least one membrane switch arranged on the common printed circuit board (3).

2. Tiller head according to Claim 1, **characterized in that** at least one membrane switch has two or more contact faces (4b, 5b) arranged on the common printed circuit board (3).

3. Tiller head according to Claim 1 or 2, **characterized in that** at least one membrane switch has at least one resistance track arranged on the common printed circuit board (3).

4. Tiller head according to Claim 2 or 3, **characterized in that** the common printed circuit board (3) has at least one associated contact membrane (13), which can be electrically connected to a contact face (4a, 4b, 5a, 5b) or a resistance track by means of a pressure force which can be exerted on the contact membrane (13).

5. Tiller head according to one of Claims 1 to 4, **characterized in that** at least one membrane switch has at least one pressure-sensitive resistance membrane.

6. Tiller head according to one of Claims 1 to 5, **characterized in that** all of the signal transmitters arranged on the common printed circuit board (3) are formed by membrane switches.

7. Tiller head according to one of Claims 4 to 6, **characterized in that** electrical components fixed on the printed circuit board (3) are exclusively arranged on the side remote from the contact membrane (13).

8. Tiller head according to one of Claims 1 to 7, **characterized in that** a signal transmitter (5) for generating a multi-level or continuously variable control signal for the driving speed of the industrial truck is arranged on the common printed circuit board (3).

9. Tiller head according to one of Claims 1 to 8, **characterized in that** a signal transmitter (5) for generating an on/off control signal for the driving direction of the industrial truck is arranged on the common printed circuit board (3).

10. Tiller head according to one of Claims 1 to 9, **characterized in that** a signal transmitter (4) for generating a multi-level or continuously variable control signal for the lifting speed of a lifting device is arranged on the common printed circuit board (3).

11. Tiller head according to one of Claims 1 to 10, **characterized in that** a signal transmitter (4) for generating a multi-level or continuously variable control signal for the lowering speed of a lifting device is arranged on the common printed circuit board (3).

12. Tiller head according to one of Claims 1 to 11, **characterized in that** in each case a signal transmitter (4) for generating an on/off control signal for a horn and/or the lifting of an additional lifting device and/or the lowering of an additional lifting device is arranged on the common printed circuit board (3).

## Revendications

1. Tête de timon pour un chariot de manutention guidé par timon, des éléments de commande pour différentes fonctions du chariot de manutention, par exemple pour le mécanisme d'entraînement de déplacement ou pour un dispositif de levage étant disposés sur la tête de timon, et les éléments de commande étant en liaison active avec des générateurs de signaux (4, 5) pour générer des signaux de commande électriques, au moins deux générateurs de signaux (4, 5) étant formés par des commutateurs à membrane, **caractérisée en ce qu'**au moins deux commutateurs à membrane sont disposés sur la platine commune (3) et qu'un signal de commande graduel ou à plusieurs niveaux peut être généré avec au moins un commutateur à membrane disposé sur la platine commune (3) et qu'un signal de commande marche/arrêt peut être généré avec au moins un commutateur à membrane disposé sur la platine commune (3).

2. Tête de timon selon la revendication 1, **caractérisée en ce qu'**au moins un commutateur à membrane présente plusieurs surfaces de contact (4b, 5b) disposées sur la platine commune (3).

3. Tête de timon selon la revendication 1 ou 2, **caractérisée en ce qu'**au moins un commutateur à membrane présente au moins une piste résistive disposée sur la platine commune (3).

4. Tête de timon selon la revendication 2 ou 3, **caractérisée en ce qu'**au moins une membrane de contact (13) est associée à la platine commune (3), laquelle peut être reliée électriquement avec une surface de contact (4a, 4b, 5a, 5b) ou avec une piste résistive au moyen d'une force de pression pouvant être exercée sur la membrane de contact (13).

5. Tête de timon selon l'une des revendications 1 à 4 **caractérisée en ce qu'**au moins un commutateur à membrane présente au moins une membrane résistive sensible à la pression.

6. Tête de timon selon l'une des revendications 1 à 5 **caractérisée en ce que** tous les générateurs de signaux disposés sur la platine commune (3) sont formés par des commutateurs à membrane.

7. Tête de timon selon l'une des revendications 4 à 6, **caractérisée en ce que** les composants électriques fixés sur la platine (3) sont exclusivement disposés sur le côté à l'opposé de la membrane de contact (13).

8. Tête de timon selon l'une des revendications 1 à 7, **caractérisée en ce qu'**un générateur de signaux (5) destiné à générer un signal de commande à plusieurs niveaux ou graduel pour la vitesse de déplacement du chariot de manutention est disposé sur la platine commune (3).

9. Tête de timon selon l'une des revendications 1 à 8, **caractérisée en ce qu'**un générateur de signaux (5) destiné à générer un signal de commande marche/arrêt pour le sens de déplacement du chariot de manutention est disposé sur la platine commune (3).

10. Tête de timon selon l'une des revendications 1 à 9, **caractérisée en ce qu'**un générateur de signaux (4) destiné à générer un signal de commande à plusieurs niveaux ou graduel pour la vitesse de levage d'un dispositif de levage est disposé sur la platine commune (3).

11. Tête de timon selon l'une des revendications 1 à 10, **caractérisée en ce qu'**un générateur de signaux (4) destiné à générer un signal de commande à plusieurs niveaux ou graduel pour la vitesse de descente d'un dispositif de levage est disposé sur la platine commune (3).

12. Tête de timon selon l'une des revendications 1 à 11, **caractérisée en ce qu'**un générateur de signaux (4) respectivement destiné à générer un signal de commande marche/arrêt pour un avertisseur sonore et/ou le levage d'un dispositif de levage supplémentaire et/ou la descente d'un dispositif de levage supplémentaire est disposé sur la platine commune (3).
